# FASCICULE DE BREVET EUROPEEN

(11) **EP 1 838 519 B1**
(45) Date de publication et mention de la délivrance du brevet: **13.07.2011**
(21) Numéro de dépôt: 05817515.9
(22) Date de dépôt: 13.12.2005
(51) Int. Cl.: B29C 70/88, B29C 45/14, B29C 45/00, B29C 45/26, B29D 30/62

(54) **METHODE ET DISPOSITIF POUR LA FABRICATION D'UNE BANDE DE ROULEMENT POUR PNEUMATIQUE**
VERFAHREN UND VORRICHTUNG ZUR HERSTELLUNG EINER LAUFFLÄCHE FÜR EINEN REIFEN
METHOD AND APPARATUS FOR MAKING A RUNNING TREAD FOR A TYRE

(30) Priorité: 24.12.2004 FR 0413962; 04.02.2005 FR 0501127
(43) Date de publication de la demande: 03.10.2007
(73) Titulaire: Société de Technologie Michelin, 63000 Clermont-Ferrand (FR); Michelin Recherche et Technique S.A., 1763 Granges-Paccot (CH)
(72) Inventeur: ORSAT, Thierry, F-63140 CHATEL-GUYON (FR)
(74) Mandataire: Lasson, Cédric Y. M.
(86) Numéro de dépôt international: PCT/EP2005/056721
(87) Numéro de publication internationale: WO 2006/069912

(56) Documents cités:
- EP-A- 0 345 201
- EP-A- 1 213 130
- WO-A-01/07243
- WO-A-01/45918
- DE-A1- 19 846 365
- US-A- 3 837 986
- US-A- 4 230 511
- US-A- 4 857 122

## Description

La présente invention concerne la fabrication de pneumatiques. Plus précisément, elle se rapporte à la fabrication de pneumatiques dont la bande de roulement comprend un ou plusieurs inserts d'un matériau élastomérique différent du matériau élastomérique qui constitue l'essentiel de ladite bande de roulement.

Il est connu de concevoir des pneumatiques dont la bande de roulement comprend différents mélanges de caoutchouc. La demande WO 03/089257 décrit des exemples de telles bandes de roulement. Il est également connu des documents US 4857122 et US 3837986 des méthodes et des dispositifs de moulage par injection de la bande de roulement d'un pneumatique. Il s'agit là de venir apporter du mélange sous pression à l'intérieur du moule. Il est aussi connu du document EP 1213130 une méthode et un dispositif pour insérer des fibres unitaires de renforcement dans la bande de roulement d'un pneumatique. Cette insertion de fibre a pour but de modifier les caractéristiques de rigidité du matériau constitutif de la bande de roulement. Ce même document propose également d'introduire d'autres constituants que des fibres, par exemple des adhésifs ou des mélanges très collants dans la bande de roulement.

La fabrication industrielle de telles bandes de roulement pose des difficultés. En particulier, certains effets recherchés ne peuvent être obtenus que dans la mesure où la position des inserts de matériau élastomérique dans la bande de roulement finale (c'est à dire après moulage) est suffisamment précise et reproductible. De même, il peut être souhaitable que les dimensions de ces inserts soient également précises et reproductibles. Une telle fabrication industrielle doit également être économique.

L'objectif de l'invention est une méthode et un dispositif de fabrication de pneumatiques dont la bande de roulement comprend des inserts de matériau élastomérique différent qui permettent de surmonter certaines au moins des difficultés précitées.

Pour cela, l'invention propose une méthode selon la revendication 1.

De préférence, le mélange d'insertion est injecté dans la bande de roulement crue par l'intermédiaire d'une buse après que l'extrémité de la buse a été enfoncée dans la bande de roulement crue. De préférence, l'extrémité de la buse est extraite de la bande de roulement crue au plus tard au cours de l'injection du mélange d'insertion.

De préférence, le mélange d'insertion est acheminé vers l'extrémité de la buse à l'aide d'une extrudeuse, de préférence une extrudeuse volumétrique et de préférence encore, par l'intermédiaire d'une pluralité de conduits sensiblement parallèles.

De préférence, l'étape de moulage final de la bande de roulement est réalisée de manière à former des découpures à la surface de la bande de roulement, au moins une paroi desdites découpures étant au moins partiellement constituée de mélange d'insertion.

De préférence, on injecte simultanément une pluralité d'inserts de manière à couvrir une partie de la bande de roulement correspondant à un motif de base de la sculpture du pneumatique.

Selon un mode de réalisation préféré de l'invention, le pneumatique est assemblé et moulé sur un noyau, la forme du noyau étant proche de la forme finale de la cavité intérieure du pneumatique.

De préférence, la bande de roulement moulée comportant une sculpture, la position dudit insert étant déterminée par rapport à la sculpture, ladite méthode comprenant les étapes consistant à:
- injecter ledit insert au sein de la bande de roulement crue dans une position déterminée par rapport au noyau;
- positionner ledit noyau portant ledit pneumatique cru et ledit insert dans un moule extérieur selon un azimut déterminé.

L'invention concerne également un dispositif selon la revendication 10.

De préférence, la forme extérieure de l'extrémité de la buse correspond sensiblement à la forme de l'insert.

De préférence, les moyens d'alimentation en mélange d'insertion cru comprennent une extrudeuse, de préférence volumétrique.

De préférence, le dispositif comprend en outre des moyens d'indexation de la position du ou des inserts par rapport à la bande de roulement moulée.

De préférence, les moyens d'indexation comprennent un premier index lié au noyau et apte à coopérer avec un premier index complémentaire lié à un organe moteur du noyau lors de l'assemblage du pneumatique cru et comportant un deuxième index lié au noyau et apte à coopérer lors du moulage avec un deuxième index complémentaire lié au moule extérieur.

De préférence, le premier et le deuxième index constituent un moyen unique.

De préférence, la buse comprend une pluralité de conduits essentiellement parallèles.

De préférence, le dispositif comprend une pluralité de buses solidaires et disposées selon un motif de base de la sculpture du pneumatique, ladite pluralité de buses étant alimentée par des moyens d'alimentation communs.

D'autres avantages de l'invention seront également déduits de la description des figures suivantes:
- La figure 1 est une vue schématique en coupe selon un plan perpendiculaire à l'axe d'un pneumatique comportant un insert selon l'invention.
- La figure 2 est une vue de détail de la partie du pneumatique contenue dans le cercle B de la figure 1.
- Les figures 3 à 11 montre schématiquement un mode de réalisation de la méthode de l'invention.
- La figure 12 est une vue schématique du moulage d'une incision selon la méthode de l'invention.
- La figure 13 est une vue schématique du moulage d'un bloc de sculpture selon la méthode de l'invention.
- La figure 14 est une vue schématique d'un autre exemple de bande de roulement réalisée selon la méthode de l'invention.
- Les figures 15 à 17 montrent un exemple de buse utilisable dans le dispositif de fabrication selon l'invention.
- La figure 18 illustre un autre exemple de buses selon l'invention.
- Les figures 19 et 20 illustrent le principe d'un mode de réalisation préféré de l'invention.

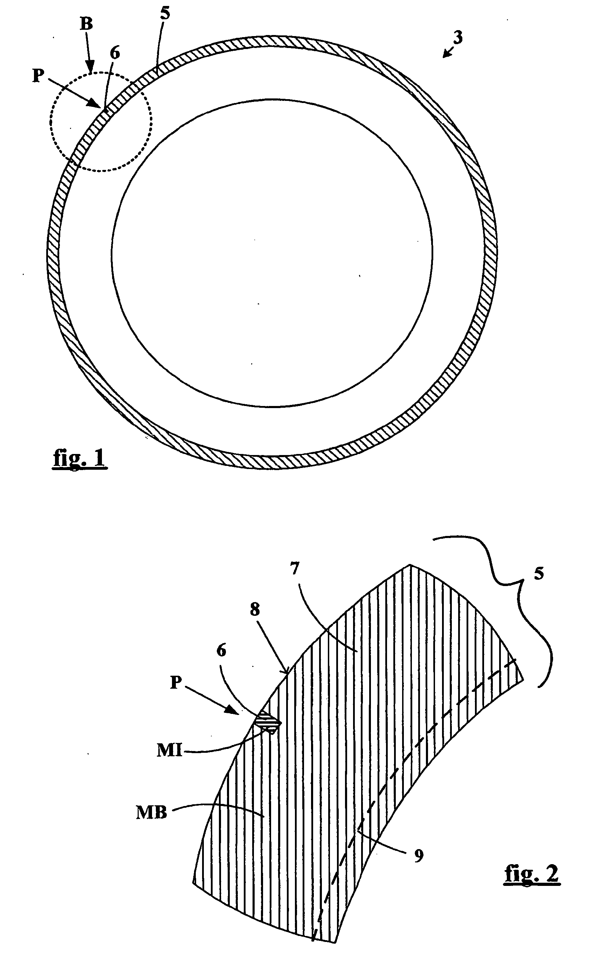

Sur la figure 1, on a représenté un pneumatique cru 3, c'est à dire tel qu'il se présente avant son moulage final (on utilise également le terme « ébauche »). Le pneumatique cru, comporte une partie radialement extérieure 5, généralement appelée "sommet" qui apparaît ici en coupe.

La figure 2 est une vue plus détaillée mais tout aussi schématique de la zone délimitée par le cercle B sur la figure 1. Le sommet 5 comprend principalement la bande de roulement 7 et des renforts de structure. On a schématiquement représenté par un trait pointillé la structure renforçante 9 (renforts de carcasse, de sommet ou de protection, ces renforts pouvant être radiaux, biais ou circonférentiels). La bande de roulement 7 est constituée majoritairement d'un matériau élastomérique (ou « mélange ») de base et comprend au moins un insert 6 d'un matériau élastomérique différent du matériau élastomérique de base. Cet insert est disposé dans la bande de roulement crue selon une position « P » déterminée.

Pour la commodité de la suite de la description, le matériau élastomérique de base sera désigné « mélange de base » (MB) et le matériau élastomérique différent constituant le ou les inserts sera désigné « mélange d'insertion » (MI).

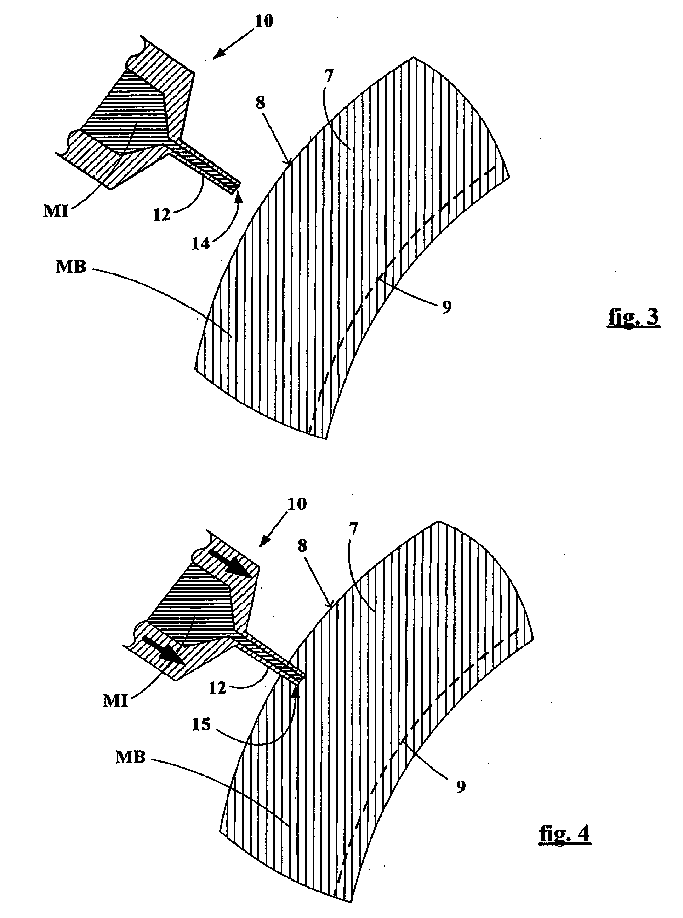

Un mode de réalisation de la méthode selon l'invention est schématiquement décrit par la série des figures 3 à 8 qui montrent un cycle complet d'insertion de mélange dans une bande de roulement crue.

A la figure 3, un dispositif d'insertion de mélange 10 apte à acheminer une quantité déterminée de mélange d'insertion (MI) est positionné en regard de la surface 8 de la bande de roulement 7. La bande de roulement est constituée d'un mélange de base (MB) cru. Le dispositif d'insertion 10 comporte une buse 12 dont la sortie 14 fait face à la bande de roulement crue.

A la figure 4, la buse 12 s'enfonce dans la bande de roulement crue 7 selon une direction sensiblement radiale. De préférence, la buse s'enfonce d'une profondeur sensiblement égale à la profondeur de l'insert envisagé. Une cavité 15 (dont la forme correspond à la forme de l'extrémité de la buse 12) est donc formée dans la bande de roulement crue. Des moyens de positionnement de la buse (non représentés) permettent de déplacer la buse au moins radialement par rapport à la bande de roulement.

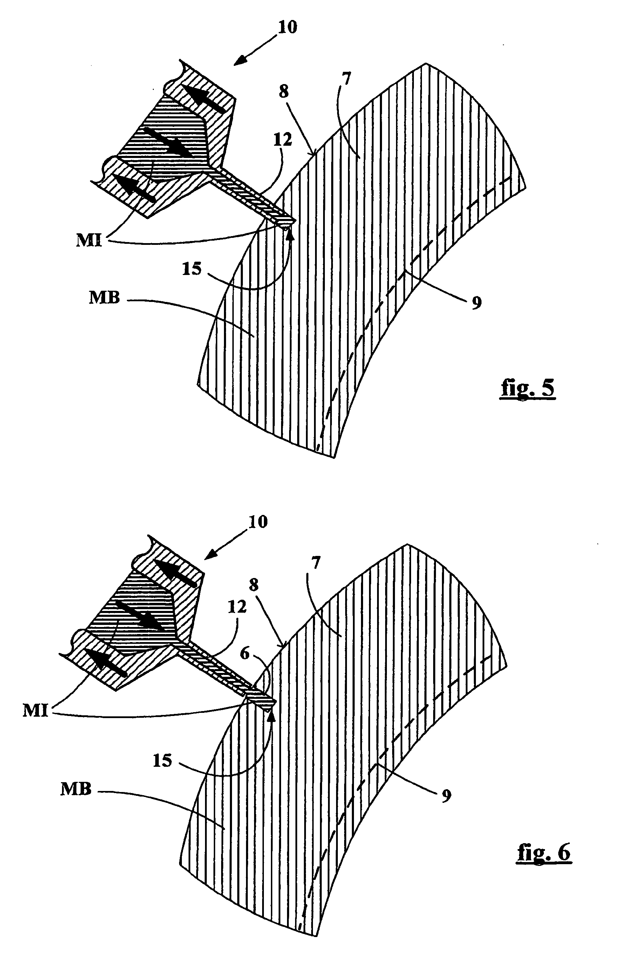

A la figure 5, le mélange d'insertion MI est injecté dans la cavité 15. La buse 12 du dispositif d'insertion est extraite de la cavité 15 de la bande de roulement crue au plus tard au cours de l'injection du mélange d'insertion. De préférence, comme représenté ici, la buse est extraite progressivement au cours de l'injection et à une vitesse correspondant au débit de mélange d'insertion MI. Cette précaution permet d'éviter que la cavité créée par la buse ne se referme (du fait du reflux du mélange de base déplacé) avant d'être remplie par le mélange d'insertion. Cependant, la buse peut également être extraite de la bande de roulement crue avant l'injection du mélange d'insertion, voire après l'injection.

A la figure 6, l'apport de mélange d'insertion se poursuit jusqu'à sensiblement remplir la cavité 15. La buse est alors complètement extraite de la cavité.

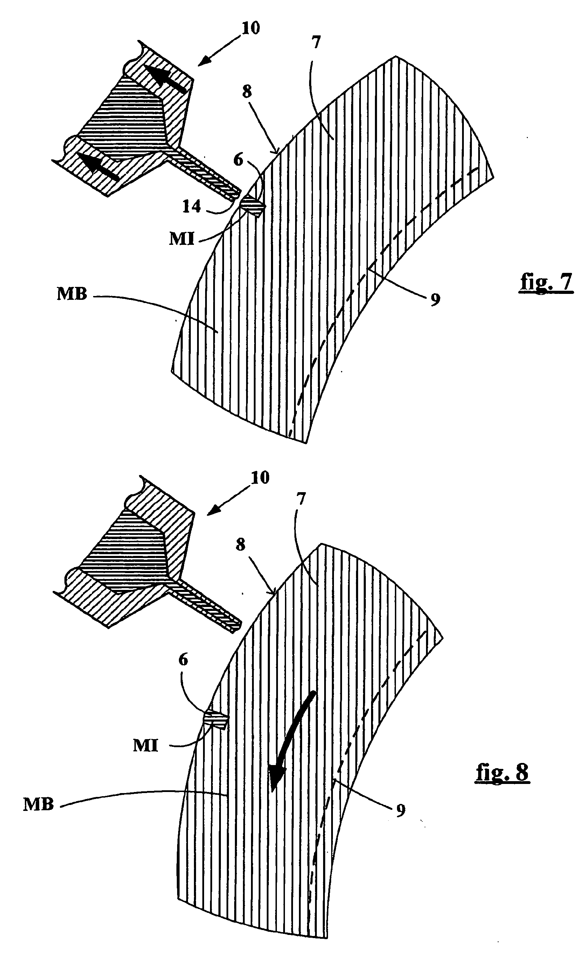

A la figure 7, l'apport de mélange d'insertion est interrompu et le recul de la buse se poursuit de sorte que le mélange d'insertion se rompt au niveau de la sortie 14 de la buse.

A la figure 8, la bande de roulement pourvue d'un premier insert 6 est déplacé par rapport au dispositif d'insertion 10 (ou vice-versa) et un nouveau cycle d'insertion de mélange peut commencer. Sur cette figure, on visualise le mouvement rotatif de la bande de roulement 7. Cependant, le déplacement peut bien sûr être axial ou à la fois rotatif et axial. Les étapes décrites précédemment peuvent alors être répétées le nombre de fois nécessaire à l'insertion du nombre désiré d'inserts, ces inserts pouvant d'ailleurs être identiques ou différents.

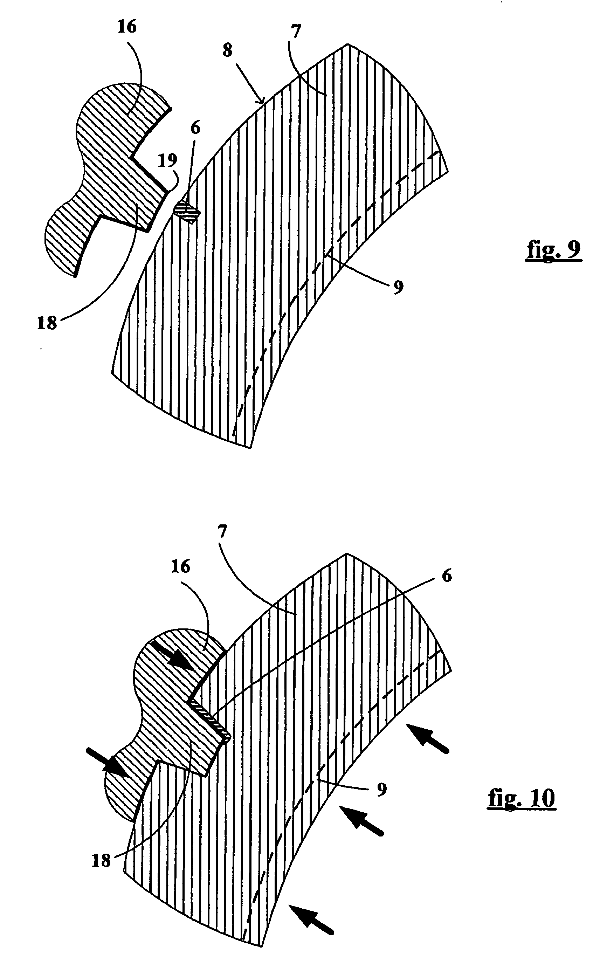

Comme on vient de le voir, l'invention permet d'insérer une quantité déterminée d'un mélange différent au sein d'une bande de roulement crue en vue de son moulage ultérieur et donc de sa cuisson. La méthode selon l'invention peut donc comprendre en outre une étape de moulage particulière. Les figures 9 à 11 illustrent un mode de réalisation préférée de la méthode selon l'invention dans lequel l'insert 6 est mis en forme de manière particulière lors du moulage final de la bande de roulement.

A la figure 9, la bande de roulement 7 portant l'insert 6 est placée dans un moule 16 dans une position relative telle que l'insert 6 se trouve en regard d'une projection 18 du moule, cette projection étant destinée à mouler un relief correspondant (en creux) dans la bande de roulement. Sur cet exemple l'arrête 19 de la projection est sensiblement centrée par rapport à l'insert 6.

La figure 10 montre la situation créée par l'enfoncement de la projection 18 dans la bande de roulement crue 7 lors du moulage. Le mélange d'insertion cru a été partiellement emporté par l'arrête 19. On comprend qu'en fonction des caractéristiques des deux mélanges, de la forme de la projection 18 et de son arrête 19 mais surtout en fonction du positionnement relatif du moule et de la bande de roulement crue, on pourra obtenir des résultats différents.

De manière connue en soi, le moulage peut être provoqué par un mouvement radial de fermeture du moule ou par un mouvement d'expansion radiale du pneumatique cru ou par une combinaison de ces deux mouvements radiaux.

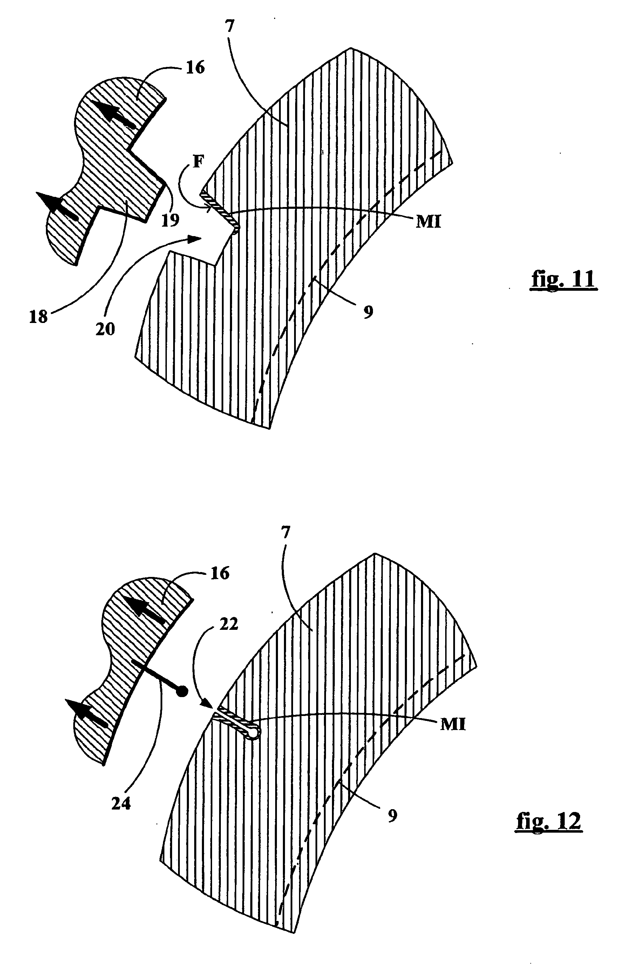

La figure 11 montre le démoulage de la bande de roulement après sa cuisson. La découpure 20 moulée par la projection 18 comporte une paroi F constituée de mélange d'insertion MI. Les autres parois de la découpure 20 sont ici constituées du mélange de base MB. Sur cet exemple, la découpure 20 a une profondeur environ 2 fois plus importante que celle de l'insert cru.

A la figure 12, on a représenté un autre exemple de découpure. Il s'agit ici d'une incision 22 qui a été moulée à l'aide d'une lamelle 24. Sur cet exemple l'extrémité de la lamelle est épaissie. Les deux parois de l'incision 22 sont ici recouvertes d'une couche de mélange d'insertion MI. On comprend que pour obtenir un tel résultat, l'insert de mélange différent doit être sensiblement centré par rapport à la lamelle 24 lors du moulage. Le fait que l'extrémité de la lamelle soit épaissie favorise le déplacement du mélange d'insertion. Une lamelle fine et plate aura tendance à trancher le mélange en minimisant son déplacement. Dans un cas comme dans l'autre, les parois de l'incision sont constituées en totalité ou en partie de mélange d'insertion.

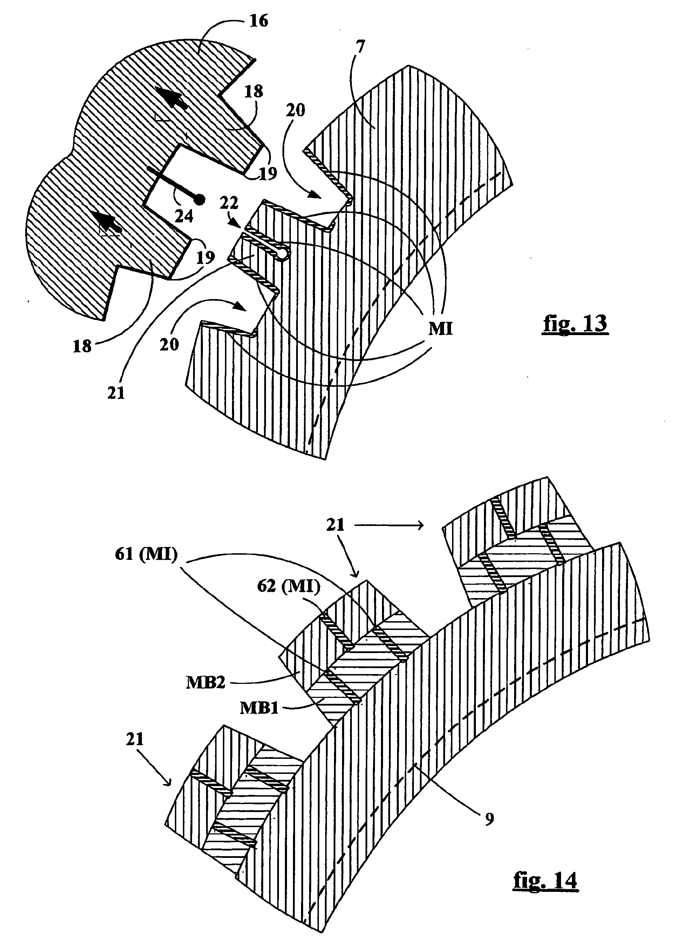

A la figure 13, on a représenté un autre exemple de moulage. Sur cette vue, le moule 16 forme à la fois deux rainures larges 20 et une incision 22 dans le bloc 21 situé entre les rainures. Ici, toutes les faces sensiblement radiales des découpures sont recouvertes du mélange d'insertion MI. On comprend qu'un tel résultat peut être obtenu selon la méthode décrite ci-dessus après avoir placé cinq inserts dans la bande de roulement crue, quatre inserts étant positionnés chacun en regard d'une arrête 19 du moule 16, le cinquième faisant face à la lamelle 24.

Selon les principes de l'invention, on peut également réaliser des couches de mélange d'insertion en fond de sillons ou au centre de l'aire de contact d'un élément de sculpture. La méthode selon l'invention permet en fait d'innombrables variantes autour du principe d'un moulage d'une bande de roulement crue contenant des inserts de mélange différent. Des exemples de bandes de roulement contenant des inserts de mélange différent sont décrits en particulier dans la demande internationale WO 03/089257 ou dans la demande européenne EP 1065075. La plupart de ces exemples peuvent être obtenus à l'aide de la présente méthode en injectant un nombre d'inserts adapté en des positions adaptées de la bande de roulement crue.

La méthode de l'invention peut également être mise en oeuvre sur des couches intermédiaires de mélange de base lorsque la bande de roulement est réalisée en empilant successivement deux ou plusieurs couches de mélange de base. Un tel exemple est représenté à la figure 14. Sur cette figure, l'épaisseur des blocs de sculpture 21 est constituée de deux couches successives de mélange de base (MB1 et MB2). Après la pose de la première couche (MB1), on a injecté selon la méthode décrite plus haut une première série d'inserts 61. Après la pose de la seconde couche (MB2), on a injecté une seconde série d'inserts 62. Les inserts 62 sont décalés par rapport aux inserts 61. Si par exemple les propriétés d'usure du mélange d'insertion sont différentes de celles du mélange de base, une telle constitution peut permettre à la sculpture de la bande de roulement d'évoluer au cours de son usure afin de conserver des incisions de faible profondeur comme décrit dans la demande EP 1065075.

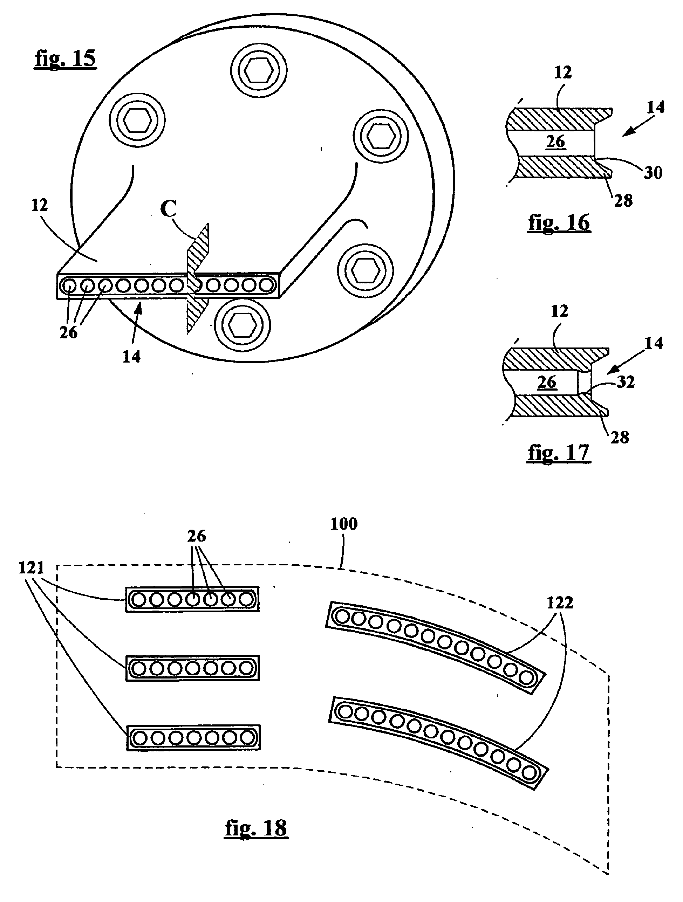

A la figure 15, on a représenté un exemple de buse 12 du dispositif d'insertion de mélange selon l'invention. La buse a ici une forme aplatie et une section extérieure rectangulaire. Une telle buse lorsqu'elle est introduite radialement dans la bande de roulement crue (comme décrit à la figure 4) aura pour effet de former une cavité 15 sensiblement parallélépipédique. La sortie 14 de la buse est alimentée par une pluralité de conduits parallèles 26.

La figure 16 montre l'extrémité de la buse en coupe selon le plan C de la figure 15. On voit bien sur cette coupe que la sortie 14 comporte une bouche relativement volumineuse par rapport au conduit 26. Cette caractéristique peut favoriser la rupture reproductible du mélange d'insertion au niveau de l'épaulement 30 lors du retrait de la buse (voir figure 7). Dans le même but, pour une section d'alimentation donnée, on pourra préférer utiliser un nombre élevé de petits conduits plutôt qu'un nombre plus faible de conduits de taille supérieure. Le nombre de conduits approprié dépend également du profil de la buse considérée.

La figure 17 montre une variante préférée de la buse de la figure 15 dans laquelle les conduits 26 présentent en outre une réduction 32 de leur section finale pour faciliter encore la séparation localisée de l'insert.

L'épaisseur de la buse peut par exemple varier de 2 à 10 mm pour réaliser les exemples illustrés ici, la largeur de la buse étant alors de préférence comparable à la largeur des pains de sculpture envisagés sur la bande de roulement.

Dans le cadre de l'invention, plusieurs buses peuvent être utilisée en parallèle, alimentées par des moyens d'alimentation uniques et positionnées par rapport à la bande de roulement par des moyens de positionnement uniques.

On peut également mettre simultanément en oeuvre, sur une même ébauche de pneumatique, plusieurs dispositifs d'insertion de mélange 10, chacun de ces dispositifs débouchant par une ou plusieurs buses.

Lorsque la position et/ou la forme des inserts est (sont) liée(s) aux éléments de sculpture de la bande de roulement moulée, et que la sculpture comporte une répétition d'un ou plusieurs motifs de base sur la circonférence de la bande de roulement, il peut être avantageux d'injecter en une seule opération tous les inserts correspondant à un motif de base. Ainsi, le nombre d'opérations d'injection est réduit au nombre de répétitions du ou des motif(s) de base. La figure 18 illustre cette possibilité : trois buses 121 et deux buses 122 sont disposés de manière à permettre l'injection simultanée de cinq inserts. Cet ensemble peut couvrir une partie de la bande de roulement correspondant à une matrice 100 de la sculpture. De manière connue en soi, une matrice est une partie de la sculpture correspondant à un motif de base répété plusieurs fois dans l'ensemble de la sculpture du pneumatique. La sculpture complète peut utiliser une matrice unique ou plusieurs (par exemple deux ou trois) matrices différentes.

Les buses d'une matrice peuvent être solidaires et être alimentées par des moyens communs. Dans le cas où la sculpture comprend des matrices différentes, il peut être nécessaire de prévoir des ensembles de buses également différents.

Sur l'exemple de la figure 18, la matrice 100 couvre sensiblement la moitié de la largeur de la bande de roulement.

Les moyens d'alimentation de la (ou des) buse(s) en mélange d'insertion peuvent être une extrudeuse. Le débit de l'extrudeuse peut être contrôlé par la vitesse de rotation de sa vis ou par tout autre dispositif de régulation de débit. De préférence, l'extrudeuse est une extrudeuse volumétrique, c'est-à-dire une extrudeuse dont le débit peut-être contrôlé de manière relativement précise par le contrôle de la vitesse de rotation de sa vis. Le document EP 690229 décrit des exemples d'extrudeuses volumétriques.

Le contrôle du déroulement de la fabrication (début et fin de l'injection de chaque insert ou groupe d'inserts, rotation de la forme, déplacements radiaux, et axiaux de la buse) peut alors de préférence être basé sur la rotation de la vis de l'extrudeuse volumétrique. La méthode selon l'invention peut être exécutée avec une fréquence élevée, par exemple de l'ordre d'un cycle complet (positionnement de la buse et injection de l'insert) par seconde.

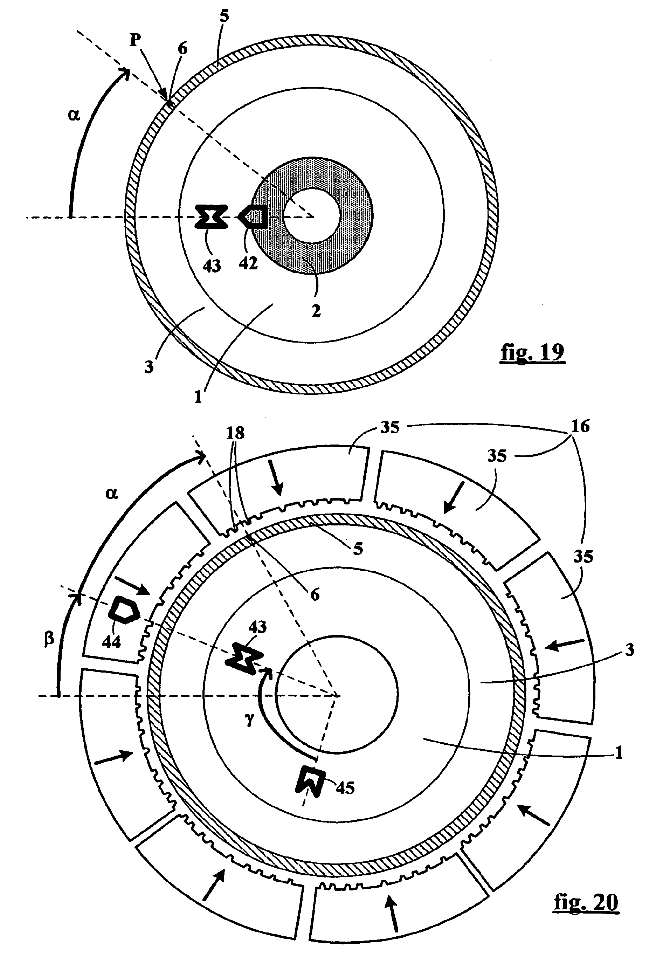

La méthode de l'invention est de préférence mise en oeuvre dans le cadre d'une fabrication des pneumatiques sur noyau. On utilise alors de préférence des moyens d'indexation dont le principe est illustré aux figures 19 et 20. Pour des raisons de clarté du dessin, ces figures montrent un insert 6 unique mais comme décrit plus haut, la méthode selon l'invention permet la pose d'inserts en nombre illimité.

La figure 19 montre le pneumatique de la figure 1 au cours de sa fabrication selon un mode de réalisation préféré de l'invention. Le pneumatique cru est ici confectionné sur un noyau rotatif 1 par enroulement de matériaux de grande longueur et/ou par dépôt successif(s) d'éléments de longueur réduite. Le noyau 1 est entraîné par un organe moteur tel qu'une broche ou un moyeu 2. La position du noyau 1 par rapport au moyeu 2 est fixée par des premiers moyens d'indexation (symbolisés ici par des premiers index 42 et 43 de formes complémentaires et positionnés en regard l'une de l'autre). La position angulaire du noyau 1 lors de sa rotation peut donc être contrôlée en relation avec la commande des différents outils de pose, y compris le dispositif d'insertion de mélange décrit plus haut. Il existe de nombreux moyens d'indexation connus comme par exemple un système de rainure et clavette ou un emmanchement comportant un plat ou toute forme d'assemblage ne permettant qu'une seule position angulaire relative. La position angulaire de la broche ou moyeu 2 est contrôlée directement ou indirectement de manière connue en soi par exemple grâce à un codeur incrémental.

Ainsi, lorsqu'un insert 6 est mis en place dans la bande de roulement crue, la position P de cet insert par rapport au noyau 1 est tout à fait reproductible. Cette position P peut se décomposer en trois éléments que nous allons maintenant détailler:
- La position radiale de l'insert (dans le sens de l'épaisseur de la bande de roulement) est donnée par le procédé d'insertion, par exemple en fonction de la profondeur d'introduction de la buse dans la bande de roulement et du contrôle du débit de la buse,
- La position transversale de l'insert (dans le sens axiale du pneumatique) est également donnée par le procédé d'insertion et en particulier par la position axiale de la buse et par sa forme,
- Enfin, la position circonférentielle de l'insert (par exemple l'azimut α) par rapport au noyau est contrôlée par l'intermédiaire du système d'indexation, par exemple tel que décrit plus haut.

Lorsque l'assemblage du pneumatique cru est terminé, c'est à dire que tous ses éléments constitutifs sont en place sur le noyau (y compris le ou les inserts), cet ensemble (noyau + pneumatique cru) est placé dans un moule extérieur qui donne sa forme finale au pneumatique et particulièrement à sa bande de roulement.

On a représenté à la figure 20 l'étape du procédé de fabrication durant laquelle le pneumatique cru assemblé sur son noyau est placé dans un moule extérieur 16 (symbolisé ici par des secteurs de moulage 35). Les secteurs 35 comportent des projections 18 destinées à former des reliefs négatifs à la surface du pneumatique (voir figures 9 à 13). Afin que la position de l'insert 6 (et en particulier son azimut) par rapport aux rainures ou incisions de la bande de roulement moulée soit reproductible d'un pneumatique à l'autre, le noyau portant le pneumatique cru est positionné de manière reproductible par rapport au moule extérieur (c'est à dire ici par rapport aux secteurs 35). Ceci peut être obtenu grâce à des deuxièmes moyens d'indexation comparables aux premiers moyens d'indexation décrits plus haut pour la pose des inserts. Les deuxièmes moyens d'indexation comprennent un deuxième index lié au noyau et un deuxième index complémentaire lié au moule extérieur. On peut bien sûr utiliser des deuxièmes index (44, 45) indépendants des premiers index (42, 43). On peut également utiliser le premier index (43) lié au noyau, ledit premier index coopérant cette fois avec le deuxième index complémentaire (44) lié au moule pourvu que le positionnement angulaire du pneumatique dans le moule soit reproductible au cours des cycles de fabrication. En effet, on comprend bien sur cette figure que n'importe quel point du noyau est fixe relativement à la position P de l'insert 6. On peut donc associer un point quelconque (mais unique) du noyau à un point quelconque (mais unique) du moule extérieur afin que la position angulaire de l'insert dans le moule soit reproduite d'un cycle de fabrication à l'autre. Si l'on prend l'exemple décrit à la figure 20 où l'on a utilisé comme deuxièmes moyens d'indexation les index 44 et 43, l'insert 6 considéré ici sera à chaque cycle de fabrication, c'est à dire dans chaque pneumatique fabriqué, positionné vis à vis du moule (considéré fixe) à l'azimut α+ β par rapport à l'horizontale. Au contraire, si l'indexation lors du moulage utilise comme deuxièmes moyens d'indexation l'association des index 44 et 45, l'insert 6 sera à chaque cycle de fabrication positionné vis à vis du moule à l'azimut α + β + γ par rapport à l'horizontale puisque l'index 45 est décalé par rapport à l'index 43 d'un angle γ.

Les deuxièmes moyens d'indexation peuvent également opérer au niveau des outils (non représentés) qui sont utilisés pour manipuler le noyau en vue du moulage après l'assemblage du pneumatique cru. En effet, un moyeu identique ou similaire au moyeu 2 de la figure 19 peut servir à transporter et/ou positionner angulairement le noyau au sein du moule. La deuxième indexation a lieu dans ce cas par le centre et non plus par la périphérie du noyau comme cela est représenté à la figure 20.

Le positionnement reproductible peut être également obtenu de la manière suivante: le noyau portant le pneumatique cru étant placé dans une même position angulaire à la fin de chaque cycle de pose des inserts, on transporte le noyau et on le place dans le moule en évitant toute rotation (ou en autorisant une rotation d'un angle constant). Ceci peut être mis en oeuvre de manière simple, par exemple par une translation sur des rails ou par une rotation par manège du poste d'insertion au poste de moulage.

Lorsque la sculpture du pneumatique (ou la partie de sculpture visée) comporte un motif qui se répète deux ou plusieurs fois le long de la circonférence (voir ci-dessus la description d'une matrice illustrée à la figure 18), c'est à dire que les inserts peuvent prendre plusieurs positions pour un effet identique lors du moulage, on peut naturellement utiliser des moyens d'indexation comportant un nombre correspondant de positions possibles (ou un sous-multiple de ce nombre).

Le noyau 1 peut prendre différentes formes, il peut être rigide, par exemple selon l'enseignement du document EP 0242840, ou plus ou moins déformable (gonflable) selon les documents FR 2005116 ou EP 0822047, pourvu qu'il permette à la fois la confection et le moulage.

On a pu constater que la méthode de l'invention permet une grande constance dans le positionnement final des inserts au sein des pneumatiques finis. La méthode de l'invention peut permettre d'obtenir une dispersion inférieure ou égale à 1 mm sur la circonférence d'un pneumatique tourisme ou moto.

Le choix du matériau élastomérique d'insertion MI est bien sûr lié à la fonction qu'il doit assurer dans le pneumatique fini. De préférence cependant, on utilise un matériau élastomérique dont les propriétés mécaniques à cru favorisent la rupture en traction afin d'obtenir une séparation suffisamment reproductible (voir la description des figures 7 et 15 à 17).

Lorsque l'on dit qu'un matériau élastomérique est « cru », cela signifie qu'il n'est pas « cuit » en référence à la réticulation qui est généralement réalisée lors du moulage finale des pneumatiques. En pratique, la réticulation peut être entamée avant le moulage, par exemple du fait de l'augmentation de température occasionnée par l'extrusion. Ainsi, il faut comprendre que le matériau élastomérique est dit « cru » tant qu'il n'est pas encore complètement réticulé.

L'invention s'applique particulièrement à l'obtention de bandes de roulement multi-matériaux. Naturellement, on peut appliquer l'invention à d'autres zones du pneumatique avec les adaptations nécessaires.

D'une façon générale, le terme "pneumatique" employé dans le présent mémoire couvre naturellement tout type de bandage élastique, pneumatique ou non pneumatique, l'invention concernant essentiellement le moulage de ce "pneumatique" et non son fonctionnement.

## Revendications

1. Méthode de fabrication d'un pneumatique, ledit pneumatique comprenant une bande de roulement (7) essentiellement constituée d'un mélange de base (MB), la bande de roulement comprenant en outre au moins un insert (6) d'un mélange d'insertion (MI), ladite méthode comprenant des étapes consistant à:
• préparer une bande de roulement en mélange de base cru,
• injecter dans la bande de roulement crue une quantité déterminée du mélange d'insertion cru dans une position (P) déterminée par rapport à la bande de roulement crue,
• mouler ladite bande de roulement de manière à former des découpures (20, 22) à la surface de la bande de roulement, au moins une paroi (F) desdites découpures étant au moins partiellement constituée de mélange d'insertion (MI).

2. Méthode selon la revendication 1 dans laquelle le mélange d'insertion est injecté dans la bande de roulement crue par l'intermédiaire d'une buse (12) après que l'extrémité de la buse a été enfoncée dans la bande de roulement crue.

3. Méthode selon la revendication 2 dans laquelle l'extrémité de la buse (12) est extraite de la bande de roulement crue au plus tard au cours de l'injection du mélange d'insertion.

4. Méthode selon l'une des revendications 2 ou 3 dans laquelle le mélange d'insertion est acheminé vers l'extrémité (14) de la buse (12) à l'aide d'une extrudeuse (10).

5. Méthode selon la revendication 4 dans laquelle l'extrudeuse est une extrudeuse volumétrique (10).

6. Méthode selon l'une des revendications 2 à 5 dans laquelle le mélange d'insertion est acheminé vers l'extrémité de la buse par l'intermédiaire d'une pluralité de conduits (26) sensiblement parallèles.

7. Méthode selon l'une des revendications précédentes dans laquelle on injecte simultanément une pluralité d'inserts de manière à couvrir une partie de la bande de roulement correspondant à un motif de base de la sculpture du pneumatique.

8. Méthode selon l'une des revendications précédentes dans laquelle le pneumatique est assemblé et moulé sur un noyau (1), la forme du noyau étant proche de la forme finale de la cavité intérieure du pneumatique.

9. Méthode selon la revendication 8 la bande de roulement moulée comportant une sculpture, la position (P) dudit insert étant déterminée par rapport à la sculpture, ladite méthode comprenant les étapes consistant à:
• injecter ledit insert (6) au sein de la bande de roulement crue (7) dans une position (P, α) déterminée par rapport au noyau;
• positionner ledit noyau portant ledit pneumatique cru (3) et ledit insert dans un moule extérieur (35) selon un azimut (β) déterminé.

10. Dispositif pour la fabrication d'un pneumatique selon la méthode de l'une quelconque des revendications précédentes, ledit dispositif comprenant un noyau rotatif (1) apte à supporter le pneumatique cru (3), des moyens d'alimentation (10) en mélange d'insertion cru d'une buse (12), des moyens de positionnement de la buse par rapport au noyau et des moyens d'indexation de la position du ou des inserts par rapport à la bande de roulement moulée.

11. Dispositif selon la revendication 10 dans lequel la forme extérieure de l'extrémité de la buse correspond sensiblement à la forme de l'insert.

12. Dispositif selon l'une des revendications 10 ou 1 dans lequel les moyens d'alimentation en mélange d'insertion cru comprennent une extrudeuse.

13. Dispositif selon la revendication 12 dans lequel les moyens d'alimentation en mélange d'insertion cru comprennent une extrudeuse volumétrique.

14. Dispositif selon la revendication 10 dans lequel les moyens d'indexation comprennent un premier index (43) lié au noyau (1) et apte à coopérer avec un premier index complémentaire (42) lié à un organe moteur (2) du noyau lors de l'assemblage du pneumatique cru et comportant un deuxième index (43; 45) lié au noyau et apte à coopérer lors du moulage avec un deuxième index complémentaire (44) lié au moule extérieur (35).

15. Dispositif selon la revendication 14 dans lequel le premier et le deuxième index constituent un moyen unique (43).

16. Dispositif selon l'une des revendications 10 à 15 dans lequel la buse comprend une pluralité de conduits (26) essentiellement parallèles.

17. dispositif selon l'une des revendications précédentes comprenant une pluralité de buses solidaires et disposées selon un motif de base de la sculpture du pneumatique, ladite pluralité de buses étant alimentée par des moyens d'alimentation (10) communs.

## Claims

1. A method of manufacturing a tire, said tire including a tread (7) essentially consisting of a base compound (MB), the tread furthermore including at least one insert (6) of an insertion compound (MI), said method comprising steps consisting in:
• preparing a tread made of an uncured base compound;
• injecting, into the uncured tread, a defined quantity of the uncured insertion compound in a position (P) defined in relation to the uncured tread;
• molding said tread so as to form cuts (20, 22) in the surface of the tread, at least one wall (F) of said cuts consisting at least partly of insertion compound (MI).

2. The method as claimed in claim 1, in which the insertion compound is injected into the uncured tread via a nozzle (12) after the end of the nozzle has been sunk into the uncured tread.

3. The method as claimed in claim 2, in which the end of the nozzle (12) is extracted from the uncured tread at the latest during injection of the insertion compound.

4. The method as claimed in either of claims 2 and 3, in which the insertion compound is conveyed toward the end (14) of the nozzle (12) using an extruder (10).

5. The method as claimed in claim 4, in which the extruder is a volumetric extruder (10).

6. The method as claimed in one of claims 2 to 5, in which the insertion compound is conveyed toward the end of the nozzle via a plurality of substantially parallel ducts (26).

7. The method as claimed in one of the preceding claims, in which a plurality of inserts are injected simultaneously so as to cover part of the tread corresponding to a base pattern of the tire tread pattern.

8. The method as claimed in one of the preceding claims, in which the tire is assembled and molded on a core (1), the shape of the core being close to the final shape of the internal cavity of the tire.

9. The method as claimed in claim 8, the molded tread including a tread pattern, the position (P) of said insert being defined relative to the tread pattern, said method comprising the steps consisting in:
• injecting said insert (6) into the uncured tread (7) in a position (P, α) defined relative to the core;
• positioning said core carrying said uncured tire (3) and said insert in an external mold (35) along a defined azimuth (β).

10. A device for manufacturing a tire according to the method of any one of the preceding claims, said device comprising a rotary core (1) capable of supporting the uncured tire (3), feed means (10) for feeding a nozzle (12) with an uncured insertion compound and means for positioning the nozzle relative to the core and means for indexing the position of the insert(s) relative to the molded tread.

11. The device as claimed in claim 10, in which the external shape of the end of the nozzle corresponds substantially to the shape of the insert.

12. The device as claimed in either of claims 10 and 11, in which the means for feeding the uncured insertion compound comprise an extruder.

13. The device as claimed in claim 12, in which the means for feeding the uncured insertion compound comprise a volumetric extruder.

14. The device as claimed in claim 10, in which the indexing means comprise a first index (43) associated with the core (1) and capable of cooperating with a complementary first index (42) associated with a driving member (2) for driving the core during assembly of the uncured tire and including a second index (43; 45) associated with the core and capable of cooperating, during molding, with a complementary second index (44) associated with the external mold (35).

15. The device as claimed in claim 14, in which the first and second indices constitute a single means (43).

16. The device as claimed in one of claims 10 to 15, in which the nozzle comprises a plurality of essentially parallel ducts (26).

17. The device as claimed in one of the preceding claims, comprising a plurality of integral nozzles arranged according to a base pattern feature of the tire tread pattern, said plurality of nozzles being fed by common feed means (10).

## Patentansprüche

1. Herstellungsverfahren für einen Reifen, wobei der Reifen eine Lauffläche (7) aufweist, die im Wesentlichen aus einem Basisgemisch (MB) besteht, wobei die Lauffläche ferner mindestens einen Einsatz (6) aus einem Einfügegemisch (MI) aufweist, wobei das Verfahren die folgenden Schritte aufweist:
• Vorbereiten einer Lauffläche aus einem Rohbasisgemisch,
• Einspritzen einer bestimmten Menge Roheinfügegemisch in die Rohlauffläche in einer bestimmten Position (P) in Bezug zu der Rohlauffläche,
• Formen der Lauffläche derart, dass Ausschnitte (20, 22) auf der Oberfläche der Lauffläche ausgebildet werden, wobei mindestens eine Wand (F) der Ausschnitte wenigstens teilweise aus Einfügegemisch (MI) besteht.

2. Verfahren nach Anspruch 1, bei dem das Einfügegemisch in die Rohlauffläche anhand einer Düse (12) eingespritzt wird, nachdem das Ende der Düse in die Rohlauffläche gedrückt wurde.

3. Verfahren nach Anspruch 2, bei dem das Ende der Düse (12) spätestens im Laufe des Einspritzens des Einfügegemischs aus der Rohlauffläche gezogen wird.

4. Verfahren nach Anspruch 2 oder 3, bei dem das Einfügegemisch mit Hilfe einer Extrusionsvorrichtung (10) zu dem Ende (14) der Düse (12) befördert wird.

5. Verfahren nach Anspruch 4, bei dem die Extrusionsvorrichtung eine volumetrische Extrusionsvorrichtung (10) ist.

6. Verfahren nach einem der Ansprüche 2 bis 5, bei dem das Einfügegemisch von mehreren im Wesentlichen parallelen Leitungen (26) zu dem Ende der Düse befördert wird.

7. Verfahren nach einem der vorhergehenden Ansprüche, bei dem man gleichzeitig mehrere Einsätze derart einspritzt, dass man einen Teil der Lauffläche, der einem Basismuster des Profils des Reifens entspricht, deckt.

8. Verfahren nach einem der vorhergehenden Ansprüche, bei dem der Reifen auf einem Kern (1) zusammengefügt und geformt wird, wobei die Form des Kerns der Endform des Innenhohlraums des Reifens ähnelt.

9. Verfahren nach Anspruch 8, wobei die geformte Lauffläche ein Profil aufweist, wobei die Position (P) des Einsatzes in Bezug zu dem Profil bestimmt wird, wobei das Verfahren die folgenden Schritte aufweist:
• Einspritzen des Einsatzes (6) in die Rohlauffläche (7) in einer Position (P, α), die in Bezug zu dem Kern bestimmt ist;
• Positionieren des Kerns, der den Rohreifen (3) trägt, und des Einsatzes in einer Außenform (35) gemäß einem bestimmten Azimut (β).

10. Vorrichtung zum Herstellen eines Reifens gemäß dem Verfahren nach einem der vorhergehenden Ansprüche, wobei die Vorrichtung einen Drehkern (1) aufweist, der den Rohreifen (3) tragen kann, Mittel zum Zuführen (10) eines Roheinfügegemischs einer Düse (12), Mittel zum Positionieren der Düse in Bezug zu dem Kern und Positioniermittel der Position des einen oder der mehreren Einsätze in Bezug zu der geformten Lauffläche.

11. Vorrichtung nach Anspruch 10, bei der die Außenform des Endes der Düse im Wesentlichen der Form des Einsatzes entspricht.

12. Vorrichtung nach einem der Ansprüche 10 oder 11, bei der die Zuführmittel von Roheinfügegemisch eine Extrusionsvorrichtung aufweisen.

13. Vorrichtung nach Anspruch 12, bei der die Zuführmittel von Roheinfügegemisch eine volumetrische Extrusionsvorrichtung aufweisen.

14. Vorrichtung nach Anspruch 10, bei der die Positioniermittel einen ersten Index (43) aufweisen, der mit dem Kern (1) verbunden ist und mit einem ersten ergänzenden Index (42) zusammenwirken kann, der mit einem Antriebsorgan (2) des Kerns bei dem Zusammenfügen des Rohreifens verbunden ist und einen zweiten Index (43; 45) aufweist, der mit dem Kern verbunden ist und beim Formen mit einem zweiten ergänzenden Index (44), der mit der Außenform (35) verbunden ist, zusammenwirken kann.

15. Vorrichtung nach Anspruch 14, bei der der erste und der zweite Index ein einziges Mittel (43) bilden.

16. Vorrichtung nach einem der Ansprüche 10 bis 15, bei der die Düse mehrere im Wesentlichen parallele Leitungen (26) aufweist.

17. Vorrichtung nach einem der vorhergehenden Ansprüche, die mehrere Düsen enthält, die fest verbunden und gemäß einem Basismuster des Profils des Reifens angeordnet sind, wobei die mehreren Düsen von gemeinsamen Versorgungsmitteln (10) versorgt werden.
